Europäisches Patentamt

**European Patent Office**

Office européen des brevets

(11) Numéro de publication: **0 284 493**
**A1**

## (12) DEMANDE DE BREVET EUROPEEN

(21) Numéro de dépôt: **88400621.4**

(22) Date de dépôt: **16.03.88**

(51) Int. Cl.⁴: **H 04 B 1/66**
H 04 L 7/04, H 04 J 3/06

(30) Priorité: **19.03.87 FR 8703778**

(43) Date de publication de la demande:
**28.09.88 Bulletin 88/39**

(84) Etats contractants désignés:
**BE DE FR GB IT NL SE**

(71) Demandeur: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Saussier, Alain**
**74, rue d'Epinay**
**F-95100-Argenteuil (FR)**

**Sebilet, Bruno Roger**
**24, Place des Arts**
**F-92500-Rueil Malmaison (FR)**

(74) Mandataire: **Moinat, François et al**
**S.N.E.C.M.A. Service des Brevets Boîte Postale 81**
**F-91003 Evry Cédex (FR)**

(54) **Procédé et dispositif pour le codage et le décodage d'une émission à large bande dite à étalement de spectre.**

(57) Procédé pour le codage et le décodage d'une émission à large bande, dite à étalement de spectre, dans lequel le signal à transmettre est modulé par un code formé d'une séquence pseudo-aléatoire de période T composée de deux demi-séquences de période T/2, le code utilisé pour la démodulation, à la réception, étant composé des mêmes demi-séquences l'une d'elles étant affectée d'une rotation circulaire par rapport à l'autre.

FIG:6

Bundesdruckerei Berlin

**Description**

## PROCEDE ET DISPOSITIF POUR LE CODAGE ET LA DECODAGE D'UNE EMISSION A LARGE BANDE DITE A ETALEMENT DE SPECTRE

La présente invention se rapporte à un procédé pour le codage et le décodage d'une émission à large bande, procédé du type selon lequel un signal utile à transmettre est modulé au moyen d'un modulateur commandé par un code formé d'une séquence pseudo-aléatoire de valeurs binaires et le signal transmis et reçu est démodulé au moyen d'un démodulateur commandé par le même code, le code utilisé en réception étant calé par rapport à celui utilisé à l'émission par corrélation avec le signal reçu.

Il est bien connu, en vue d'éviter les brouillages et le décryptage d'une émission, de procéder à un codage par un large étalement du spectre. Dans le procédé du type indiqué ci-dessus, l'étalement du spectre est réalisé en modulant le signal utile par un code dont le spectre est beaucoup plus important. En réception, le code est recalé par corrélation avec le signal reçu à cet effet, l'asservissement est réalisé grâce à une mesure de l'erreur de synchronisation obtenue en effectuant la différence des mesures de corrélation avance et retard obtenues par corrélation du signal reçu avec deux versions décalées du signal codé généré par le récepteur.

Un tel procédé de synchronisation a notamment été décrit dans l'ouvrage de R.C. DIXON : "Spread spectrum techniques" aux pages 210 et suivantes concernant la rubrique : " Delay-lock tracking loop ".

Ce procédé antérieur nécessite donc, pour sa mise en oeuvre, deux corrélateurs qui effectuent les mesures avance et retard ainsi que des circuits qui délivrent des signaux de somme et de différence.

Dans de nombreuses applications, des contraintes de volume ou de coût du matériel font rechercher sa simplicité. Il est alors souhaitable de n'utiliser qu'un seul corrélateur au lieu de deux.

La présente invention a pour but de fournir un procédé du type précité qui en conserve les avantages tout en ne mettant en oeuvre qu'un seul corrélateur.

Ce but est atteint du fait que, conformément à l'invention, à l'émission, la séquence pseudo-aléatoire de période T est composée de deux demi-séquences pseudo-aléatoires, de période T/2 à intercorrélation nulle ou quasi-nulle, utilisées en alternance, et à la réception la séquence pseudo-aléatoire de démodulation est composée des mêmes demi-séquences l'une d'elles étant affectée d'un décalage t correspondant à une rotation circulaire. Le décalage t affectant l'une des demi-séquences est avantageusement égal à un bit.

La présente invention se rapporte aussi à un dispositif permettant la mise en oeuvre du procédé dans un système de communication comprenant un émetteur et au moins un récepteur.

Ce but est atteint au moyen d'un dispositif du type comportant, du côté émetteur : un modulateur recevant un signal utile à transmettre et engendrant un signal codé et un générateur de code formé d'une séquence pseudo-aléatoire de valeurs binaires et commandant le modulateur et, du côté du ou de chaque récepteur : un démodulateur recevant le signal codé et restituant le signal utile décodé, un second générateur de code engendrant le même code que celui utilisé du côté émetteur et commandant le démodulateur de phase, et des moyens de corrélation recevant le signal codé et reliés au second générateur de code pour caler, au moyen de signaux d'asservissement, ce second générateur de code par rapport à celui utilisé dans l'émetteur, dispositif dans lequel, conformément à l'invention,

- le générateur de code utilisé à l'émission engendre une séquence pseudo-aléatoire de période T composée de deux demi-séquences pseudo-aléatoires de période T/2, à intercorrélation nulle ou quasi nulle, utilisées en alternance,
- chaque second générateur de code engendre une séquence pseudo-aléatoire de période T composée des mêmes demi-séquences l'une d'elle étant affectée, par rapport à la même demi-séquence utilisée à l'émission, d'un décalage t correspondant à une rotation circulaire,
- les moyens de corrélation comportent un unique corrélateur recevant le signal codé reçu et le signal codé engendré par le second générateur et délivrant un premier signal d'asservissement dit signal somme, un détecteur synchrone, recevant ce premier signal d'asservissement et le signal d'alternance, délivrant un second signal d'asservissement dit signal différence.

D'autres particularités et avantages du procédé et du dispositif conformes à l'invention ressortiront à la lecture de la description faite ci-après, à titre indicatif mais non limitatif, en référence aux dessins annexés sur lesquels:

- la figure 1 est un schéma d'un corrélateur de type connu,
- les figures 2 et 3 représentent des exemples de fonctions de corrélation,
- la figure 4 est un schéma d'un dispositif connu permettant d'obtenir des signaux d'asservissement,
- la figure 5 représente les signaux d'asservissement obtenus avec le dispositif de la figure 4,
- la figure 6 représente des exemples de codes pseudo-aléatoires, conformes à l'invention et utilisés respectivement à l'émission et à la réception,
- la figure 7 est un schéma d'un dispositif conforme à l'invention permettant d'obtenir des signaux d'asservissement,
- la figure 8 représente les signaux d'asservissement obtenus, conformément à l'invention, avec le dispositif de la figure 7.

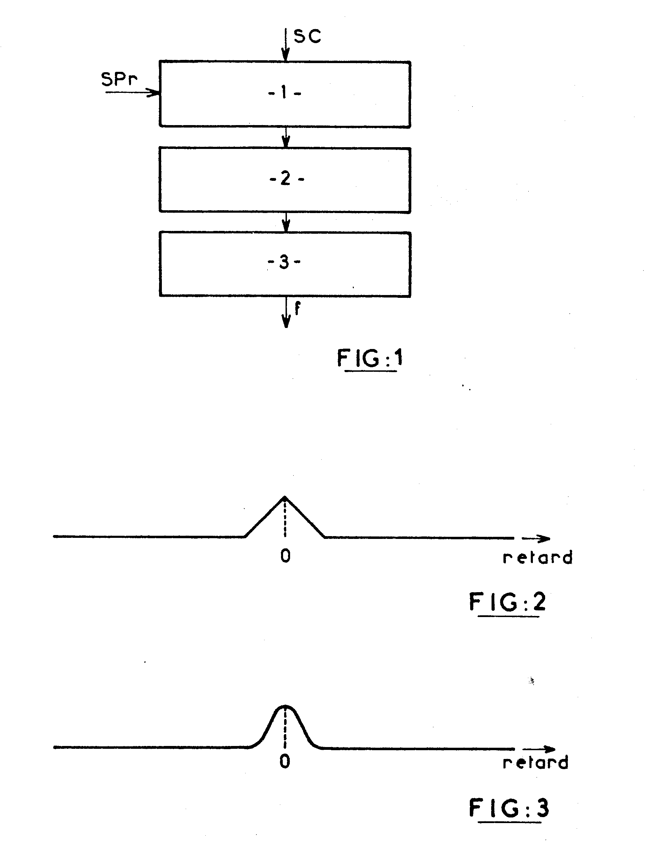

En se référant à la figure 1, il est rappelé qu'un corrélateur est un circuit qui réalise une approximation de la fonction de corrélation entre la séquence pseudo-aléatoire contenue dans le signal codé SC reçu et la séquence pseudo-aléatoire SPr générée par le récepteur. Ce circuit se compose successivement d'un modulateur 1 recevant Sc et SPr suivi d'un filtre à bande étroite 2 et d'un détecteur d'enveloppe 3 qui délivre la valeur approchée de la fonction de corrélation f. Lorsque la modulation utilisée est une modulation de phase de type $0 - \pi$, cette fonction de corrélation entre le signal codé reçu et le signal codé généré a l'allure triangulaire représentée à la figure 2.

Suivant certaines variantes, cette allure peut légèrement varier, elle peut en particulier, dans le cas d'une modulation du type dit : MSK (de la désignation anglaise Minimum Schift Keying), prendre la forme d'une période sinusoïde comme montré à la figure 3, ou tout autre forme approchante. Cette fonction de corrélation est périodique.

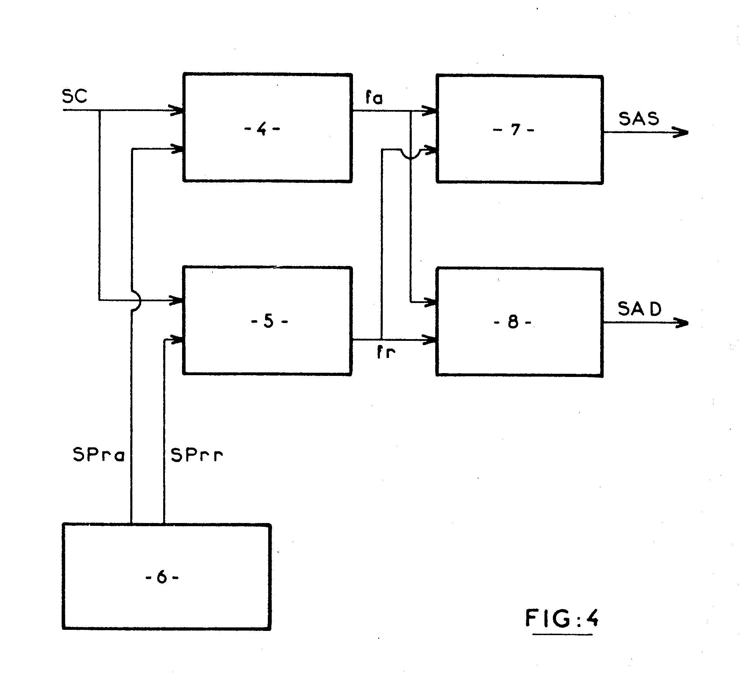

Le dispositif de synchronisation connu, représenté à la figure 4, le signal codé reçu est appliqué à deux corrélateurs 4 et 5 qui reçoivent respectivement deux versions décalées SPra (dite séquence avance) et SPrr (dite séquence retard) de la séquence pseudo-aléatoire SPr générée par un générateur 6. Les corrélateurs 4 et 5 délivrent respectivement une fonction de corrélation avance fa et une fonction de corrélationn retard fr. Les signaux d'asservissement sont obtenus au moyen, d'une part, d'un circuit sommateur 7 recevant fa et fr et délivrant le signal d'asservissement somme SAS et, d'autre part, d'un circuit différenciateur 8 recevant également fa et fr et délivrant le signal d'asservissement différence SAD.

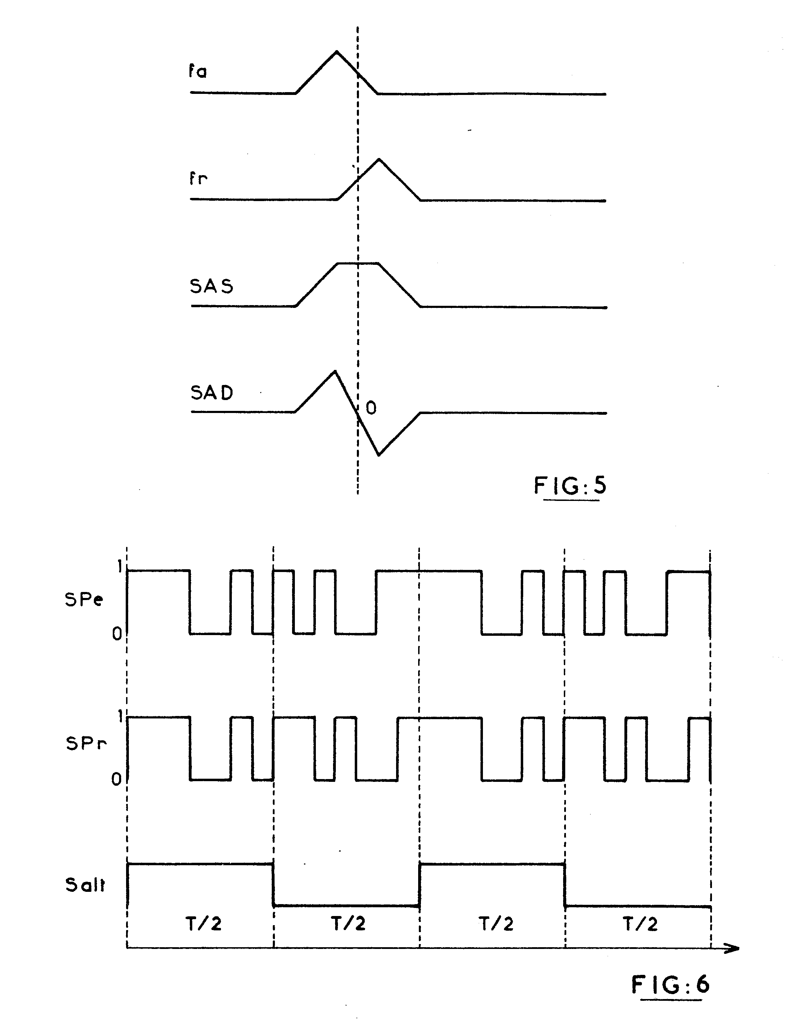

L'ensemble des signaux fa, fr, SAS et SAD sont représentés à la figure 5.

Le signal somme SAS permet de détecter, par son niveau différent de 0, le passage en phase des codes générés respectivement dans l'émetteur et le récepteur. Le signal différence SAD, permet, en utilisant les variations de tensions de part et d'autre du 0 central, d'asservir l'horloge pilotant le générateur du récepteur, donc de maintenir les codes en phase.

L'invention sera bien comprise en se référant à la figure 6 qui donne un exemple de codes pseudo-aléatoires utilisés. La séquence pseudo-aléatoire SPe générée par l'émetteur se compose de deux demi-séquences d'une durée chacune d'une demi-période T/2. Dans l'exemple illustré :
. la première demi-séquence est : 1110010
. la deuxième demi-séquence est : 1010011

Ces deux demi-séquences doivent évidemment avoir une fonction d'intercorrélation nulle ou quasi nulle.

Conformément à l'invention, la séquence pseudo-aléatoire SPr générée par le récepteur se compose également de deux demi-séquences d'égales durées. La première demi-séquence est identique à celle de SPe mais la seconde est décalée par rapport à la demi-séquence correspondante de SPe. Dans l'exemple, avec un décalage d'une durée égale à un bit :
. la première demi-séquence est : 1110010
. la deuxième demi-séquence est : 1101001
le décalage de la deuxième demi-séquence revient à une rotation circulaire puisque ce signal est périodique.

On a également représenté le signal d'alternance dont la période est égale à celle des séquences pseudo-aléatoires.

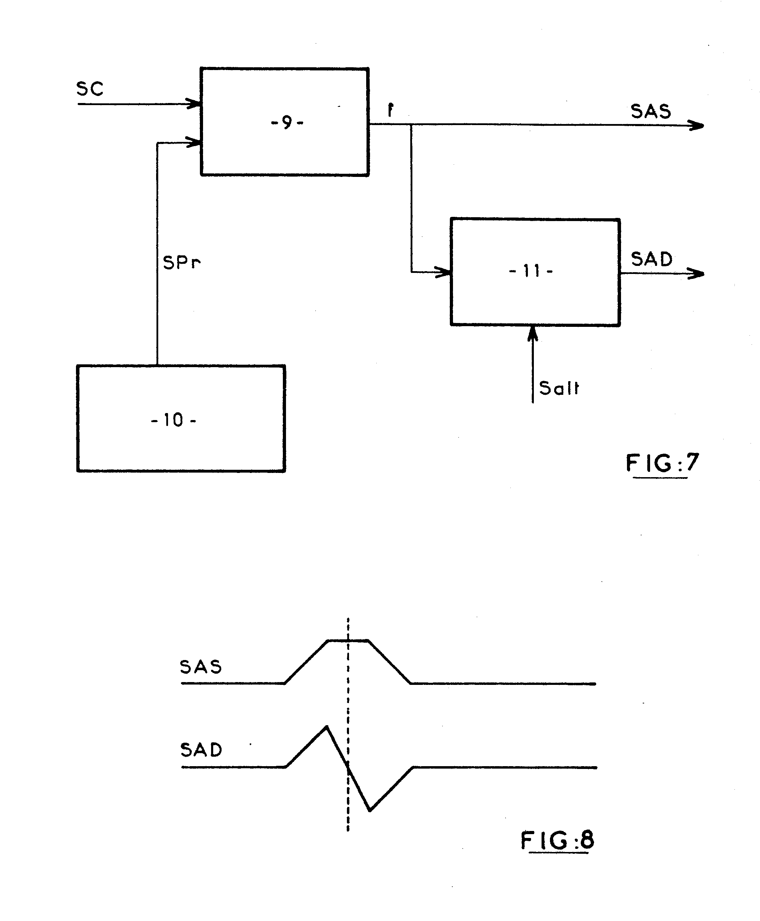

Conformément à l'invention il est possible d'obtenir des signaux d'asservissement avec le dispositif illustré à la figure 7. Celui-ci comporte un corrélateur 9, du genre de celui de la fig.1. Ce corrélateur reçoit le signal codé reçu SC et la séquence pseudo-aléatoire SPr issue d'un générateur 10 est composée de deux demi-séquences conformément à ce qui a été dit ci-dessus. Par analogie avec la méthode classique exposée ci-dessus, la fonction de corrélation f obtenue représente le signal d'asservissement somme SAS. De même, le signal d'asservissement différence SAD est obtenu par détection synchrone de la fonction f par le signal d'alternance Salt. A cet effet, on utilise un circuit multiplicateur 11.

Les allures des signaux d'asservissement obtenus, SAS et SAD sont données par la figure 8. Ces signaux ont une allure identique à deux de la figure 5 et ils permettent la synchronisation selon les mêmes modalités que pour la méthode exposée précédemment.

Les procédés et dispositifs de l'invention, simplifiés par rapport à l'art antérieur, trouvent utilisation dans toutes les applications des émissions à étalement de spectre par séquence directe dans lesquelles on désire minimiser le nombre des circuits.

On citera à titre d'exemples : les télécommandes de mobiles, les émetteurs-récepteurs portatifs, les liaisons par satellite, les radars etc...

## Revendications

1 - Procédé pour le codage et le décodage d'une émission à large bande, dite à étalement de spectre, selon lequel un signal utile à transmettre est modulé au moyen d'un modulateur commandé par un code formé d'une séquence pseudo-aléatoire de valeurs binaires et le signal transmis et reçu est démodulé au moyen d'un démodulateur commandé par le même code, le code utilisé en réception étant calé par rapport à celui utilisé à l'émission, par corrélation avec le signal reçu, caractérisé en ce que,
à l'émission, la séquence pseudo-aléatoire de période T est composée de deux demi-séquences pseudo-aléatoires, de période T/2, à intercorrélation nulle ou quasi-nulle, utilisées en alternance, et en ce que, à la réception la séquence pseudo-aléatoire de démodulation est composée des mêmes demi-séquences l'une d'elles étant affectée d'un décalage t correspondant à une rotation circulaire.

2 - Procédé selon la revendication 1, caractérisé en ce que,
le décalage t de l'une des demi-séquences est égal à un bit.

3 - Dispositif pour le codage et le décodage d'une émission à large bande, dite à étalement de spectre, dans un système de communication comprenant un émetteur et au moins un récepteur, dispositif comportant, du coté émetteur : un modulateur recevant un signal utile à transmettre et engendrant un signal codé et un générateur de code formé d'une séquence pseudo-aléatoire de valeurs binaires et commandant le modulateur ; et, du côté du ou de chaque récepteur : un démodulateur recevant le signal codé et restituant le signal utile décodé, un second génerateur de code engendrant le même code que celui utilisé du côté émetteur et commandant le démodulateur, et des moyens de corrélation (9) recevant le signal codé (sc) et reliés au second générateur de code (10) pour caler, au moyen de signaux d'asservissement (SAS - SAD), ce second générateur de code (10) par rapport à celui utilisé dans l'émetteur, caractérisé en ce que,

- le générateur de code utilisé à l'émission engendre une séquence pseudo-aléatoire de période T composée de deux demi-séquences pseudo-aléatoires de période T/2, à intercorrélation nulle ou quasi nulle, utilisées en alternance,

- chaque second générateur (10) de code engendre une séquence pseudo-aléatoire de période T composée des mêmes demi-séquences l'une d'elle étant affectée, par rapport à la même demi-séquence utilisée à l'émission, d'un décalage t correspondant à une rotation circulaire,

- les moyens de corrélation comportent un unique corrélateur (9) recevant le signal codé reçu (sc) et le signal codé engendré (SPr) par le second générateur (10) et délivrant un premier signal d'asservissement (SAS) dit signal somme, un détecteur synchrone (11), recevant ce premier signal d'asservissement et le signal d'alternance, délivrant un second signal d'asservissement (SAD) dit signal différence.

4 - Dispositif pour le codage et le décodage d'une émission à large bande, selon la revendication 3, caractérisé en ce que,

le dispositif comporte, du côté émetteur, un modulateur de phase 0 - $\pi$ et du côté récepteur, un démodulateur de phase 0 - $\pi$.

0284493

FIG:1

retard

FIG:2

retard

FIG:3

0284493

FIG:4

0284493

FIG:5

FIG:6

0284493

FIG:7

FIG:8

Office européen
des brevets

# RAPPORT DE RECHERCHE EUROPEENNE

Numero de la demande

EP  88 40 0621

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | 1985 IEEE MILITARY COMMUNICATIONS CONFERENCE, MILCOM '85, Boston, MA., 20-23 octobre 1985, "The Electronic Battle: A New Era in Military Communications", Conference Record vol. 1 des 3, pages 30-34, IEEE, New York, US; R. WARD et al.: "Optimization of full-time and time shared noncoherent code tracking loops" * Page 31, colonne de gauche, lignes 8-14; figures 1,3 *<br>--- | 1,3 | H 04 B   1/66<br>H 04 L   7/04<br>H 04 J   3/06 |
| A | 1985 IEEE MILITARY COMMUNICATIONS CONFERENCE, MILCOM '85, Boston, MA., 20-23 octobre 1985, "The Electronic Battle: A New Era in Military Communications", Conference Record vol. 1 des 3, pages 18-24, IEEE, New York, US; A.K. EL-HAKEEM et al.: "A multiprocessing approach to spread spectrum code acquisition" * Page 18, paragraphe intitulé: "Introduction" *<br>--- | 1,3 | |
| A | EP-A-0 133 107  (S.N.E.C.M.A.) * Abrégé *<br>--- | 1,3,4 | |
| P,A | US-A-4 694 467  (MUI) * Revendications 1-3 *<br>--- | 1,3 | |
| P,A | GB-A-2 189 969  (MULTITONE) * Revendication 1; figure 1 *<br>----- | 1-3 | |

DOMAINES TECHNIQUES RECHERCHES (Int. Cl.4)

H 04 B
H 04 J
H 04 L

Le présent rapport a été établi pour toutes les revendications

| Lieu de la recherche | Date d'achèvement de la recherche | Examinateur |
|---|---|---|
| LA HAYE | 03-06-1988 | SNELL T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)